# EUROPÄISCHE PATENTSCHRIFT

(11) **EP 3 221 878 B1**
(45) Veröffentlichungstag und Bekanntmachung des Hinweises auf die Patenterteilung: **10.04.2019**
(21) Anmeldenummer: 15778219.4
(22) Anmeldetag: 17.09.2015
(51) Int. Cl.: H01H 71/08, H02B 1/20

(54) **SCHALTGERÄT SOWIE SCHALTGERÄTEANORDNUNG**
SWITCHING DEVICE AND SWITCHING DEVICE ARRANGEMENT
DISPOSITIF DE COMMUTATION ET ENSEMBLE DE DISPOSITIF DE COMMUTATION

(30) Priorität: 21.11.2014 DE 202014009245 U
(43) Veröffentlichungstag der Anmeldung: 27.09.2017
(73) Patentinhaber: Ellenberger & Poensgen GmbH, 90518 Altdorf (DE)
(72) Erfinder: ROTH, Herbert, 90518 Altdorf (DE)
(74) Vertreter: FDST Patentanwälte
(86) Internationale Anmeldenummer: PCT/EP2015/071376
(87) Internationale Veröffentlichungsnummer: WO 2016/078798

(56) Entgegenhaltungen:
- EP-A1- 2 019 407
- DE-A1-102011 110 184
- US-A1- 2013 048 477

## Beschreibung

Die Erfindung bezieht sich auf ein Schaltgerät, insbesondere in Form eines anreihbaren elektrischen Schaltgerätes oder Reiheneinbaugerätes, und insbesondere auf eine Schaltgeräteanordnung mit bevorzugt mehreren derartigen Schaltgeräten, elektronischen Sicherungsautomaten, Schutzschaltern, (elektronischer oder elektromechanischer) Relais oder dergleichen.

Ein elektrisches Schaltgerät, wie beispielsweise ein Schutzschalter, ein mechanischer, elektronischer oder mechatronischer Schalter oder ein Relais, weist üblicherweise einen Einspeisungsanschluss, über den eine netzseitige und somit stromzuführende Stromleitung angeschlossen werden kann, sowie einen Lastanschluss auf, über den eine lastseitig abgehende Stromleitung anschließbar ist.

Als Schaltgeräteanordnung oder Stromverteilungssystem mit mehreren Schaltgeräten wird nachfolgend allgemein eine elektrische Installation mit mehreren elektrischen Laststromkreisen bezeichnet, denen aus einer gemeinsamen Hauptstromleitung Strom zugeführt ist, und die an eine gemeinsame Stromrückführung angeschlossen sind. Mit anderen Worten wird als Stromverteiler eine elektrische Schaltungseinrichtung bezeichnet, die es ermöglicht, über eine gemeinsame Hauptstromleitung zugeführten elektrischen Strom an mehrere parallele Laststromkreise zu verteilen, wobei Sicherungsmechanismen vorgesehen sind, die jeden Laststromkreis einzeln gegen Überlast und/oder Kurzschluss absichern.

Im Rahmen einer solchen Anordnung anreihbarer Schaltgeräte sind die Schaltgeräte schaltungstechnisch üblicherweise insbesondere an den Zweigstellen vorgesehen, an denen die Laststromkreise von der Hauptstromleitung abzweigen. Das Schaltgerät dient hierbei dazu, den zugeordneten Laststromkreis im Bedarfsfall von der stromzuführenden Hauptstromleitung zu trennen.

Eine solche Anordnung beispielsweise auf einer Tragschiene (Hutschiene) anreihbarer Schaltgeräten wird üblicherweise aus einzelnen Schutzschaltern sowie gegebenenfalls aus einer oder mehreren Einspeisungsklemmen hergestellt. Die Schutzschalter und die Einspeisungsklemmen können hierbei durch flexible Leitungsdrähte einzelverdrahtet sein. Infolge der Einzelverdrahtung ist die Montage eines solchen Stromverteilers vergleichsweise aufwändig. Das dabei gebildete Schaltungssystem ist zudem vergleichsweise unübersichtlich, was nachträgliche Änderung an einem bereits montierten Stromverteiler und das Ablösen eines einzelnen Schaltgerätes zum Zwecke dessen Austausches, insbesondere schon aus Sicherheits- oder Berührungsschutzgründen, erschwert.

Im Sinne eines vergleichsweise einfachen Anschlusses mehrerer paralleler Laststromkreise umfasst der Einspeisungsanschluss bei Schaltgeräten, die als Reiheneinbaugeräte ausgeführt sind, einen Koppelanschluss, der mit einer mehrere Schaltgeräte übergreifenden stromzuführenden Stromsammelschiene kontaktierbar ist. Die Signalstromführung kann bei einer solchen Installation entweder getrennt von den Schaltgeräten mittels separater Schaltungselemente oder gemäß der DE 10 2007 027 522 B3 ebenfalls mittels Stromschienen (Signalstromschienen) erfolgen.

Aus der DE 20 2004 008 141 U1 ist ein Stromverteiler bekannt, bei dem eine Anzahl von Schutzschaltern auf einen mit korrespondierenden Steckplätzen versehenen Sockel aufsteckbar sind. Die gemeinsame Hauptstromleitung sowie von jedem Steckplatz abgehende Zweigleitungen der einzelnen Laststromkreise sind hierbei in dem Sockel integriert. Für einen solchen Stromverteiler muss aber zwangsweise für jeden Schutzschalter ein korrespondierender Steckplatz im Sockel vorhanden sein. Ein Stromverteiler der genannten Art ist daher vergleichsweise vielteilig und somit fertigungstechnisch aufwändig. Die Zweiteilung des Stromverteilers in Sockelteil einerseits und aufgesteckte Schutzschalter andererseits bedingt ferner eine vergleichsweise große Bauhöhe, was den Einsatzbereich des Stromverteilers einschränkt. Das Dokument US 2013/048477 A1 offenbart ein Schaltgerät gemäß dem Oberbegriff des Anspruchs 1.

Der Erfindung liegt die Aufgabe zugrunde, ein besonders geeignetes anreihbares Schaltgerät anzugeben. Dieses soll geeigneterweise kompakt und einfach aufgebaut sein. Eine mit zumindest zwei solchen Schaltgeräten oder mit einem Einspeisemodul und mindestens einem weiteren Schaltgerät aufgebaute Schaltgeräteanordnung oder -vorrichtung soll möglichst bedien- und montagefreundlich sowie insbesondere bediensicher sein. Ferner soll die Vorrichtung möglichst wenige und verliersichere, insbesondere jedoch möglichst keine zusätzlichen Teile aufweisen.

Diese Aufgabe wird erfindungsgemäß gelöst mit den Merkmalen des Anspruchs 1. Vorteilhafte Ausgestaltungen und Weiterbildungen sind Gegenstand der Unteransprüche.

Hierzu ist ein, vorzugsweise zusammen mit weiteren Schaltgeräten entlang und auf einer Tragschiene (Hutschien) anreihbares, Schaltgerät mit einem um eine Drehachse schwenkbaren Kontaktträger mit mindestens einem Koppelkontakt zur Herstellung bzw. zum Lösen einer stromführenden Kontaktverbindung mit mindestens einem angereihten Schaltgeräten vorgesehen. Die Drehachse ist geeigneterweise im Bereich einer Gehäusecke vorgesehen und vorzugsweise durch Drehzapfen gebildet, welche an den Kontaktträger angeformt sind und in gehäuseseitige Lagerstellen (Lagerbuchsen) eingreifen bzw. dort drehbeweglich einliegen. Jedoch sind auch andere Arten von geräteseitigen Legerstellen denkbar.

Der Kontaktträger, vorzugsweise eines jeden Schaltgerätes, ist geeigneterweise an einer Gehäuseschmalseite eines Gerätegehäuses schwenkbar angeordnet. Ein Schaltgerät der genannten Art, insbesondere ein zur Tragschienenmontage vorgesehenes Schaltgerät, weist grundsätzlich zwei großflächige Gehäuseseiten, mit denen die angereihten Schaltgeräte aneinanderliegend angeordnet sind, und vier Schmalseiten auf, von den eine Schmalseite als Gerätebasis zur Tragschienenmontage ausgebildet ist. An einer weiteren Schmalseite sind Öffnungen für oder mit Anschlüssen oder Anschlussklemmen zum Anschluss von im Gerätebetrieb stromführenden und ggf. signalführenden Leitungen vorgesehen.

Erfindungsgemäß ist nun an einer der verbleibenden Schmalseiten der jeweilige Kontaktträger schwenkbeweglich angeordnet. Liegt die für die Anschlüsse ausgebildete Schmalseite der als Gerätebasis dienenden Schmalseite gegenüber, so ist die dem Kontaktträger zugeordnete Schmalseite vorzugsweise die im Einbauzustand des Schaltgerätes als Oberseite zugängliche Schmalseite des Gerätegehäuses.

In vorteilhafter Ausgestaltung ist der schwenkbare oder drehbewegliche Kontaktträger als Abdeckteil einer Gehäuseschmalseite, nämlich der Gehäuseoberseite ausgebildet. Zweckmäßigerweise weist der Kontaktträger ein den oder jeden Koppelkontakt tragendes Abdeckteil als ersten Trägerschenkel und ein, insbesondere hieran angeformtes, Eingriffsteil als zweiten, an den ersten Trägerschenkel vorzugsweise rechtwinklig verlaufend angeformten zweiten Trägerschenkel auf. Dabei greift das Eingriffsteil bzw. der Trägerschenkel im Zuge des Verschwenkens des Kontaktträgers in eine korrespondierende Fügeausnehmung des Gerätegehäuses ein.

Eine besonders vorteilhafte Weiterbildung sieht vor, dass der oder jeder Koppelkontakt als Federkontakt ausgebildet ist, der im Zuge des Verschwenkens mit einem geräteinternen Gegenkontakt kontaktiert. Geeigneterweise ist der Federkontakt zweischenklig mit konkav gewölbten Federschenkeln ausgeführt, deren Wölbungen einander zugewandt sind, um eine zuverlässige Kontaktkraft zu erzeugen.

Erfindungsgemäß kontaktiert der jeweilige Koppelkontakt mit einem geräteinternen Gegenkontakt. Dieser weist einen ersten Kontaktschenkel zur Kontaktierung mit diesem Koppelkontakt und einen zweiten Kontaktschenkel auf, der zur Kontaktierung mit einem Koppelkontakt eines angereihten Schaltgerätes dient. Vorteilhafterweise weist der Gegenkontakt einen Federkontaktschenkel zur Kontaktierung, insbesondere Klemmkontaktierung, mit einem geräteinternen Leiterplatten- oder Elektronikkontakt auf.

Das Schaltgerät umfasst vorzugsweise ein Gehäuse (Gerätegehäuse) und einen über eine Gehäuseseite, insbesondere über eine Gehäuseschmalseite, zugänglichen Anschluss zur Strom- und/oder Signalführung, insbesondere an eine oder von einer geräteinternen Geräteelektronik. Ein Schwenkmechanismus weist zumindest einen Koppelkontakt auf, der zum vorzugsweise geräteselektiven Öffnen und Schließen einer Kontaktverbindung vorgesehen und eingerichtet ist. Die Kontaktverbindung führt zu einem angereihten Schaltgerät oder Modul (Einspeisemodul), so dass bei geschlossener Kontaktverbindung durch entsprechendes Ein- oder Verschwenken der Koppelkontakte in Schließrichtung (Kontaktierungsrichtung) eine Strom- und/oder Signalführungsverbindung zwischen den angreihten Schaltgeräten hergestellt ist. Die Signalverbindung ist geeigneterweise bidirektional und kann als Daten- oder Signalbus ausgeführt sein.

Die Schaltgeräteanordnung weist eine Anzahl von Schaltgeräten und vorzugsweise mindestens ein Einspeisemodul als spezielles Schaltgerät, auf, welche Schaltgeräte jeweils ein Gehäuse und mindestens einen über eine Gehäuseseite zugänglichen Anschluss zur Strom und/oder Signalführung aufweisen. Ein eine Anzahl von Koppelkontakten aufweisender Schwenkmechanismus dient zum, insbesondere geräteselektiven, Öffnen und Schließen einer Kontaktverbindung zwischen den vorzugsweise angereihten Schaltgeräten und/oder Modulen. Der Schwenkmechanismus umfasst geeigneterweise eine gegenüber der Anzahl der anreihbaren Schaltgeräte um eins (1) verminderte Anzahl von Kontaktträgern. Diese sind vorzugsweise getrennt voneinander, d. h. jeweils einzeln, zweckmäßigerweise um die gleiche Drehachse und/oder koaxial zu dieser, verschwenkbar.

Das oder jedes Schaltgerät umfasst vorzugsweise eine Elektronik mit einer mit elektronischen und/oder elektronischen Bauelementen bestücken Leiterplatte, welche ihrerseits Kontaktstellen für die Energiestromführung und für die Signalstromführung aufweist. Die Elektronik kann zur aktiven Strombegrenzung und/- oder zur Überlast- und/oder Kurschlussabschaltung vorgesehen und eingerichtet sein. Denkbar sind auch anreihbare Schaltgeräte mit reiner Schalt- und/oder Relaisfunktion.

Geeigneterweise sind in der Schaltgeräteanordnung mindestens ein Einspeisemodul für die Strom- und/oder Signalstromversorgung sowie mindestens ein weiteres Schaltgerät vorgesehen. Dieses kann beispielswiese eine Relaisfunktion zum Schalten von Strom- und/oder Signalkontakten aufweisen, während ein nachfolgendes oder weiteres Schaltgerät lediglich oder vorrangig zur Fehlerdetektion (Überlast, Kurzschluss) eingerichtet ist, wobei ein entsprechendes Fehlersignal an das die Relaisfunktion aufweisende Schaltgerät zu dessen Auslösung weitergeleitet wird.

Die mit der Erfindung erzielten Vorteile bestehen insbesondere darin, dass bei einem Schaltgerät (Schutzschalter, Relais oder dergleichen) mit einem schwenkbaren Kontaktträger keine zusätzlichen Teile in Form von Verbindungsleitungen, Stromschienen oder dergleichen bereitgestellt werden müssen, um eine Durchkontaktierung angereihter Schaltgeräte herzustellen. Zudem ist ein Austausch eines oder mehrerer Schaltgeräte in einer Schaltgeräteanordnung besonders einfach ermöglicht, indem lediglich der individuelle Kontaktträger dieses Schaltgerätes verschwenkt werden muss, um die Kontaktverbindung mit den anderen Schaltgeräten zu lösen.

Des Weiteren können praktisch beliebig viele Schaltgeräte aneinander gereiht werden, ohne Stromschienenverbindungen oder Leitungsverbindungen unterschiedlicher Länge bereitzustellen. Ferner sind zur Kontaktierung der Schaltgeräte untereinander bzw. miteinander keine Schraubkontaktverbindungen herzustellen, was die Montage und Demontage der Schaltgeräte weiter vereinfacht. Die Gehäuse der angereihten Schaltgeräte können daher vorteilhafterweise geschlossen und ohne Kontaktierung an deren in der Reihenanordnung aneinander liegenden Gehäuseseiten ausgeführt sein,

Nachfolgend wird ein Ausführungsbeispiel der Erfindung anhand einer Zeichnung näher erläutert. Darin zeigen:
- Fig. 1: in einer Vorderansicht eine Anordnung mehrerer angereihter Schaltgeräte mit verschwenkbaren Kontaktträgern zur Kontaktverbindung der Schaltgeräte untereinander und mit einem Einspeisemodul als Eingangsschaltgerät,
- Fig. 2: in einer ersten Seitenansicht ein Schaltgerät mit ausgeschwenktem Kontaktträger mit Blick auf von diesem getragene Koppelkontakte,
- Fig. 3: in einer gegenüber Fig. 1 gegenüberliegenden Seitenansicht das Schaltgerät mit ausgeschwenktem Kontaktträger mit rückseitigem Blick auf dessen Eingriffsschenkel,
- Fig. 4: in einer Darstellung gemäß Fig. 1 die Schaltgeräteanordnung in einer Seitenansicht mit Blick auf eine Anschlussseite der Schaltgeräte,
- Fig. 5: in einer weiteren Seitenansicht die Schaltgeräteanordnung gemäß Fig. 4 mit Blick auf die mittels der schwenkbaren Kontaktträger verschlossen Gehäuse- bzw. Geräteschmalseiten,
- Fig. 6: eine Schaltgeräteanordnung gemäß Fig. 1 in einer ersten perspektivischen Darstellung mit vier entnommenen Gerätegehäusen sowie zwei geöffneten (ausgeschwenkten) und zwei geschlossenen (eingeschwenkten) Kontaktträgern, und
- Fig. 7: eine Schaltgeräteanordnung gemäß den Figuren 1 und 4 bis 6 in einer zweiten perspektivischen Darstellung ohne entnommene Gerätegehäuse sowie mit einem geöffneten und fünf geschlossenen Kontaktträgern.

Einander entsprechende Teile sind in allen Figuren mit den gleichen Bezugszeichen versehen.

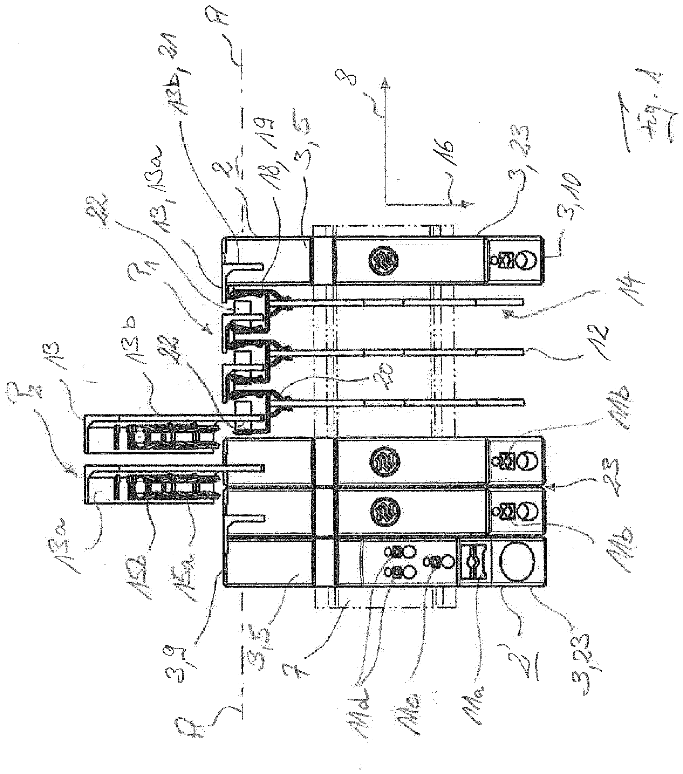

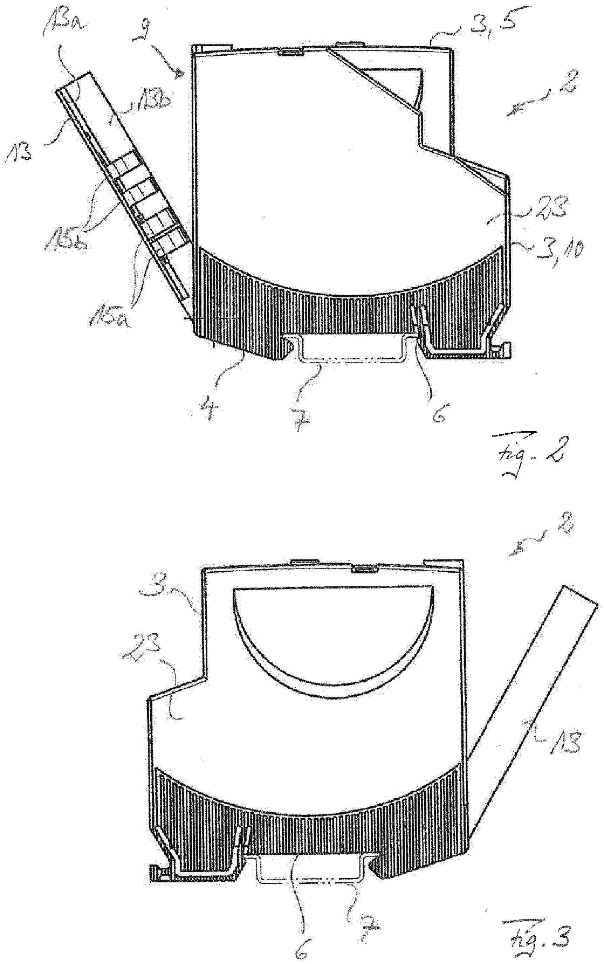

Die in Fig. 1 gezeigte Schaltgeräteanordnung 1 umfasst eine Anzahl von aneinander gereihten Schaltgeräten 2, wie ein solches in den Figuren 2 und 3 in unterschiedlichen Seitenansichten dargestellt ist. Das jeweilige Schaltgerät 2 umfasst ein Gehäuse 3 aus Isoliermaterial, beispielsweise Kunststoff. Das Schaltgerät 2 ist als Reiheneinbaugerät ausgebildet und weist eine für solche Geräte typische, abgestufte Gehäuseform mit einer Gehäusebasis auf, die von einer Montageschmalseite 4 abgeschlossen ist. Mit dieser montage- oder rückseitigen Gehäuseschmalseite (Gehäuserückseite) 4 ist das für eine definierte Einbaustellung ausgelegte Schaltgerät 2 der Rückwand eines Schaltschrankes zugekehrt, während die in Figur 1 sichtbare, frontseitige Gehäuseschmalseite (Gehäusefrontseite) 5 in Einbauposition bei Blick in den Schaltschrank einem Bediener zugewandt ist. Zur Montage weist das Schaltgerät 2 an der rückseitigen Gehäuseschmalseite 4 eine Aufrastnut 6 auf, mit welcher das jeweilige Schaltgerät 2 auf eine Tragschiene 7 aufschnappbar ist.

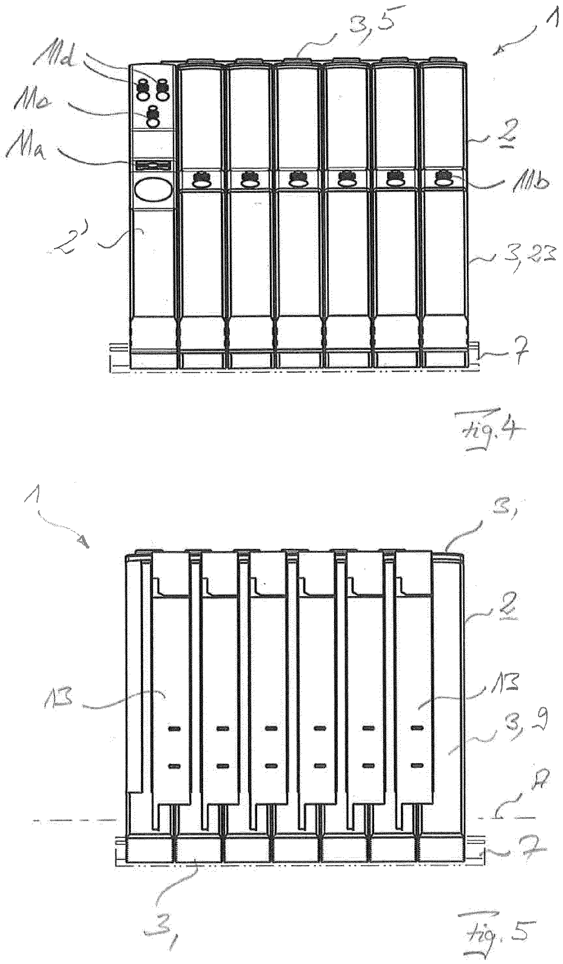

Die Profilachse der Tragschiene 7 definiert eine Reihenrichtung 8, entlang derer mehrere Schaltgeräte 2 - wie in den Figuren 1, 3 und 4 dargestellt - durch Aufschnappen auf die Tragschiene 7 zueinander fluchtend aufgereiht werden können. Die zu der Reihenrichtung 9 senkrechten Seitenflächen des Gehäuses 2 sind nachfolgend als stirnseitige Gehäuseschmalseiten 9, 10 bezeichnet. Dabei bildet die in Figur 1 obere Gehäuseschmalseite 9 eine Kontaktierungs- und Schwenkmechanismusseite der Schaltgeräte 2, welche Kontaktierungs- und Schwenkmechanismusseite in Figur 4 in Draufsicht gezeigt ist.

Zur Zuführung eines Stroms umfasst zumindest eines der Schaltgeräte 2, das nachfolgend als Einspeisemodul 2' bezeichnet wird, einen Einspeisungsanschluss (Strom-/Spannungs-Plusanschluss) 11a, der gemäß Fig. 1 im Bereich der Gehäusefrontseite 5 angeordnet ist. Der Einspeisungsanschluss 11a umfasst eine beispielsweise als Schraub- oder Schneidklemme ausgebildete Anschlussklemme, an der ein flexibler Draht- oder Litzenleiter zur Stromzuführung anschließbar ist. Der Einspeisungsanschluss 11a ist geräteintern mit einem Gerätekontakt beispielsweise auf einer Leiterplatte 12 einer Geräteelektronik verbunden (kontaktiert). Die Kontaktverbindung aller Schaltgeräte 2 mit diesem Einspeisungsanschluss 11a erfolgt mittels Kontaktträgern 13 eines jeden Schaltgerätes 2. Der jeweilige Kontaktträger 13 ist an das Gehäuse 3 des jeweiligen Schaltgerätes 2 schwenkbeweglich angelengt. Die Lage der mit A bezeichneten Schwenk- oder Drehachse ist in Fig. 2 durch die gekreuzten Linien im linken unteren Eckbereich des dort gezeigten Schaltgerätes 2 angedeutet.

Das Schaltgerät 2 umfasst weiterhin einen Lastausgang 11b, an den eine Zuführungsleitung eines Laststromkreises (bzw. Verbraucherstromkreises) anschließbar ist. Der Lastausgang 11b umfasst zum Anschluss der Zuführungsleitung eine von der entsprechenden Gehäuseschmal- oder Gehäusefrontseite 10, 5 aus zugängliche Anschlussklemme, die ebenfalls als Schraub- oder Schneidklemme ausgebildet sein kann. Zusätzlich zu den beschriebenen Anschlüssen 11a, 11b umfasst das Schaltgerät 2 einen Ground-Anschluss 11c sowie zwei Signalanschlüsse (I/O) 11d. Im Inneren des Gehäuses 3 sind der Einspeisungsanschluss 11a und der Lastanschluss 11b sowie die Anschlüsse 11c, 11d über eine nicht näher dargestellte Schalteinrichtung und/oder eine die Leiterplatte umfassende Geräteelektronik 14 miteinander verschaltet.

Die jeweilige elektrisch, elektromechanisch oder elektronisch realisierte Schalteinrichtung kann eine Schutzschalterfunktion, beispielsweise gegen Überlast, Kurzschluss und/oder zur Strombegrenzung realisieren, um den zwischen dem Einspeisungsanschluss 11 und dem Lastanschluss 11b gebildeten Strompfad im Falle eines Überstroms zu trennen. Die Schalteinrichtung kann gemäß üblicher Technik auf einem magnetischen, thermischen, elektronischen und/oder pneumatischen Wirkungsprinzip basieren.

Wie aus den Figuren 1 und 2 sowie 6 und 7 ersichtlich ist, trägt der jeweilige Kontaktträger 13 im Ausführungsbeispiel mehrere Koppelkontakte 15a, 15b. Diese sind in der an einen der Schaltgeräte 2 gezeigten eingeschwenkten Position (Einschwenk-und Kontaktposition) P₁ in der quer zur Reihenrichtung 8 verlaufenden Querrichtung 16 hinter- bzw. nebeneinander angeordnet. Bei zwei der Schaltgeräte 2 befinden sich die Kontaktträger 13 in der ausgeschwenkten Position (Ausschwenk- und Kontaktöffnungsposition) P₂. Zur Kenntlichmachung der Kontaktverbindung zwischen benachbarten Schaltgeräten 2 sind von drei Schaltgeräten 2 lediglich deren geräteinternen Leiterplatten 17 bei nicht dargestelltem Gehäuse 3 gezeigt.

Die Koppelkontakte 15a, 15b dienen zur Stromführung beziehungsweise zur Signal- oder Signalstromführung und sind geeigneterweise als zweischenklige Federkontakte ausgebildet. Deren Federschenkel weisen einander zugewandte Wölbungen auf und sind freiendseitig nach außen angekröpft. Dies erleichtert beziehungsweise verbessert die Kontaktierung der Koppelkontakte 15a, 15b im Zuge des Einschwenkvorgangs in Kontaktierungsrichtung nach Art einer Einführhilfe zur zuverlässigen Kontaktierung mit geräteinternen Gegenkontakten 18.

Die geräteinternen Gegenkontakte 18 sind U-förmig ausgestaltet, wobei jeweils einer der U-Schenkel 19 im Zuge der Kontaktierung von einem der Federschenkel der Koppelkontakte 15a, 15b kontaktierend übergriffen wird, während der andere U-Schenkel 19 vom anderen Federschenkel des jeweiligen Koppelkontaktes 15a, 15b kontaktierend übergriffen wird. Auf diese Weise werden die Kontaktverbindungen zwischen den angereihten Schaltgeräten 2 hergestellt.

Die Gegenkontakte 18 weisen auf der den U-Schenkeln abgewandten Seite ebenfalls als Federschenkel ausgebildete Kontaktschenkel 20 auf. Mit diesen erfolgt die Leiterplatte 2 übergreifend und klemmkontaktierend die Kontaktierung mit nicht näher gezeigten Kontaktstellen der jeweiligen Leiterplatte 12.

Der jeweilige Kontaktträger 13 ist als im Querschnitt L-förmiges Kunststoffteil ausgebildet. Einer der L-Schenkel (Trägerschenkel) 13a trägt innenseitig die Koppelkontakte 15a, 15b und bildet praktisch eine Abdeckplatte zum Verschließen der Kontaktseite (Gehäuseschmalseite 9 des Gehäuses 3) des jeweiligen Schaltgerätes 2. Dabei übergreift dieser Trägerschenkel 13a als Abdeckplatte teilweise auch das benachbarte Schaltgerät 2. Der weitere (zweite) L-Schenkel 13b des Kontaktträgers 13 verläuft senkrecht zu dem anderen (ersten) L- oder Trägerschenkel 13a und ist geeigneterweise an diesen angeformt. Mit diesem weiteren L- oder Trägerschenkel 13b greift der Kontaktträger 13 im Schließ- und Kontaktzustand beziehungsweise in der entsprechenden Position P₁ in einen Gehäuseschlitz 21 des jeweiligen Gehäuses 3 des Schaltgerätes 2 ein.

An den als Eingriffsteil wirksamen L- oder Trägerschenkel 13b sind Lagerzapfen 22 angeformt, die in nicht näher dargestellter Art und Weise in korrespondierende Lagerbuchsen derjenigen Gehäuseseiten 23 auf deren jeweiliger Innenseite eingreifen, mit welchen Gehäuseseiten 23 die Schaltgeräte 2 in deren Aneinanderreihung aneinanderliegen. Alternativ können in kinematischer Umkehr die Lagerzapfen auch innenseitig an diese Gehäuseseiten 23 angeformt sein, während dann die Lagerbuchsen am Kontaktträger 13 und dort an dessen als Eingriffsteil dienenden Trägerschenkeln 13b vorgesehen sind.

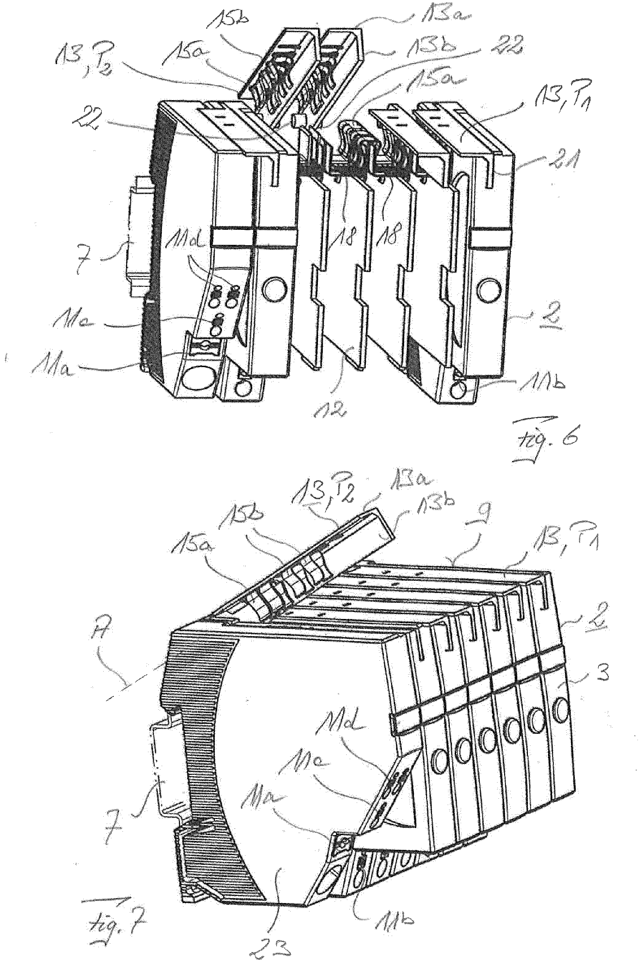

Die Figuren 4 und 5 zeigen die Schaltgeräteanordnung 1 mit in Schließstellung und damit in Kontaktposition P₂ verschwenkten Kontaktträgern 13. Diese bilden in deren Gesamtheit einen entsprechenden Schwenkmechanismus, bei dem jeder einzelne Kontaktträger 13 separat von der gezeigten Schließposition P₁ in die Offenposition P₂ verschwenkt werden können. In den Figuren 6 und 7 sind die federartigen, gewölbten Koppelkontakte 15a, 15b vergleichsweise deutlich erkennbar.

Die Erfindung ist nicht auf das vorstehend beschriebene Ausführungsbeispiel beschränkt. Vielmehr können auch andere Varianten der Erfindung von dem Fachmann hieraus abgeleitet werden, ohne den Gegenstand der Erfindung zu verlassen. Insbesondere sind ferner alle im Zusammenhang mit dem Ausführungsbeispiel beschriebenen Einzelmerkmale auch auf andere Weise miteinander kombinierbar, ohne den Gegenstand der Erfindung, wie in den angehängten Ansprüche definiert, zu verlassen.

### Bezugszeichenliste

- 1: Schaltgeräteanordnung
- 2: Schaltgerät
- 2': Schaltgerät/Einspeisemodul
- 3: Gehäuse
- 4: Gehäuseschmalseite/-rückseite
- 5: Gehäuseschmalseite/-frontseite
- 6: Aufrastnut
- 7: Tragschiene
- 8: Reihenrichtung
- 9: Gehäuseschmalseite
- 10: Gehäuseschmalseite
- 11a: Einspeisungsanschluss
- 11b: Lastanschluss
- 11c: Ground-Anschluss
- 11d: Signalanschluss (In/Out)
- 12: Leiterplatte
- 13: Kontaktträger
- 13a: Trägerschenkel/Abdeckplatte
- 13b: Trägerschenkel/Eingriffsteil
- 14: Geräteelektronik
- 15a: stromführender Koppelkontakt
- 15b: signalführender Koppelkontakt
- 16: Querrichtung
- 18: Gegenkontakt
- 19: Kontaktschenkel
- 20: Federschenkel
- 21: Fügeausnehmung
- 22: Lagerzapfen
- 23: Gehäuseanlageseite

- A: Drehachse
- P₁: Einschwenk-/Kontaktposition
- P₂: Ausschwenk-/Öffnungsposition

## Patentansprüche

1. Schaltgerät (2) mit einem Gehäuse (3) und mit einem an dieses um eine Drehachse (A) schwenkbeweglich angelenkten Kontaktträger (13) mit mindestens einem Koppelkontakt (15a, 15b) zur Herstellung bzw. zum Öffnen einer strom- und/oder signalführenden Kontaktverbindung mit mindestens einem angereihten Schaltgerät (2),
- **dadurch gekennzeichnet, dass** der Kontaktträger (13) als Abdeckteil (13a) einer Geäuseschmalseite (9) des Gehäuses (3) und zum teilweisen Übergreifen des angereihten Schaltgerätes (2) ausgebildet ist,
- wobei das Abdeckteil (13a) den oder jeden Koppelkontakt (15a, 15b) trägt, und
- wobei der Koppelkontakt (15a, 15b) mit einem geräteinternen Gegenkontakt (18) kontaktiert, der einen ersten Kontaktschenkel (19) zur Kontaktierung mit diesem Koppelkontakt (15a, 15b) und einen zweiten Kontaktschenkel (19) zur Kontaktierung mit einem Koppelkontakt (15a, 15b) des angereihten Schaltgerätes (2, 2') aufweist.

2. Schaltgerät (2) nach Anspruch 1,
**dadurch gekennzeichnet,**
**dass** der Kontaktträger (13) ein Eingriffsteil (13b) aufweist, das im Zuge des Verschwenkens des Kontaktträgers (13) in eine korrespondierende Fügeausnehmung (21) des Gerätegehäuses (3) eingreift.

3. Schaltgerät (2) nach Anspruch 2,
**dadurch gekennzeichnet,**
**dass** das Eingriffsteil (13b) an das Abdeckteil (13a) des Kontaktträgers (13) angeformt ist.

4. Schaltgerät (2) nach einem der Ansprüche 1 bis 3,
**dadurch gekennzeichnet,**
**dass** der Koppelkontakt (15a, 15b) als Federkontakt ausgebildet ist, der im Zuge des Verschwenkens mit einem geräteinternen Gegenkontakt (18) kontaktiert.

5. Schaltgerät (2) nach Anspruch 4,
**dadurch gekennzeichnet,**
**dass** der Koppelkontakt (15a, 15b) als zweischenkliger Federkontakt ausgebildet ist.

6. Schaltgerät (2) nach einem der Ansprüche 1 bis 5,
**dadurch gekennzeichnet,**
**dass** der geräteinterne Gegenkontakt (18), mit dem der Koppelkontakt (15a, 15b) kontaktiert, einen Federkontaktschenkel (20) zur Kontaktierung mit einem geräteinternen Leiterplatten- oder Elektronikkontakt aufweist.

7. Schaltgerät (2) nach einem der Ansprüche 1 bis 6,
**dadurch gekennzeichnet,**
**dass** der Kontaktträger (13) mindestens einen Lagerzapfen (22) aufweist, der in einer Lagerbuchse einer Gehäuseseitenwand (23) einsitzt.

8. Schaltgeräteanordnung (1) mit einer Anzahl von, insbesondere auf einer Trag- oder Hutschiene (7) anreihbaren, Schaltgeräten (2) nach einem der Ansprüche 1 bis 7, deren jeweiliger geräteinterne Gegenkontakt (18) zur Strom und/oder Signalführung über eine Gehäuseseite (9) zugänglich ist, wobei der oder jeder Koppelkontakt (15a, 15b) als Schwenkmechanismus zum geräteselektiven Öffnen und Schließen der Kontaktverbindung zwischen den angereihten Schaltgeräten (2) und/oder einem Einspeisemodul (2') vorgesehen und eingerichtet ist.

## Claims

1. Switching device (2) having a housing (3) and having a contact carrier (13) which is pivotably articulated about an axis of rotation (A) onto this housing, having at least one coupling contact (15a, 15b) for producing or for opening a current-carrying and/or signal-carrying contact connection having at least one joined switching device (2),
- **characterised in that**
the contact carrier (13) is formed as a cover part (13a) of a housing narrow side (9) of the housing (3) and formed for partial engagement over the joined switching device (2),
- wherein the cover part (13a) carries the or each coupling contact (15a, 15b), and
- wherein the coupling contact (15a, 15b) contacts a counter-contact (18) within the device, which has a first contact leg (19) for contacting this coupling contact (15a, 15b) and a second contact leg (19) for contacting a coupling contact (15a, 15b) of the joined switching device (2, 2').

2. Switching device (2) according to claim 1,
**characterised in that**
the contact carrier (13) has an engagement part (13b) which engages in a corresponding mating cavity (21) of the device housing (3) during the pivoting of the contact carrier (13).

3. Switching device (2) according to claim 2,
**characterised in that**
the engagement part (13b) is moulded onto the cover part (13a) of the contact carrier (13).

4. Switching device (2) according to one of claims 1 to 3,
**characterised in that**
the coupling contact (15a, 15b) is formed as a spring contact which contacts a counter-contact (18) within the device during the pivoting.

5. Switching device (2) according to claim 4,
**characterised in that**
the coupling contact (15a, 15b) is formed as a two-legged spring contact.

6. Switching device (2) according to one of claims 1 to 5,
**characterised in that**
the counter-contact (18) within the device, the coupling contact (15a, 15b) contacting said device, has a spring contact leg (20) for contacting a printed circuit board contact or electronics contact.

7. Switching device (2) according to one of claims 1 to 6,
**characterised in that**
the contact carrier (13) has at least one bearing pin (22) which is seated in a bearing bush of a housing side wall (23).

8. Switching device arrangement (1) having a number of switching devices (2) according to one of claims 1 to 7, said switching devices being, in particular, able to be joined to a carrier rail or top hat rail (7), the respective device-internal counter contact (18) of which is accessible via a housing side (9) for current and/or signal conduction, wherein the or each coupling contact (15a, 15b) is provided and set up as a pivot mechanism for device-selective opening and closing of the contact connection between the joined switching device (2) and/or a supply module (2').

## Revendications

1. Dispositif de commutation (2) comportant un boîtier (3) et un support de contacts (13) qui est articulé sur celui-ci de sorte à être pivotant autour d'un axe de rotation (A) et qui comporte au moins un contact de couplage (15a, 15b) pour l'établissement ou pour l'interruption d'une liaison de contact conduisant du courant et/ou un signal avec au moins un dispositif de commutation (2) qui lui est ajouté en série, **caractérisé en ce que**
- le support de contacts (13) est conçu sous la forme d'une partie de couvercle (13a) d'un côté étroit de boîtier (9) du boîtier (3) et pour chevaucher partiellement le dispositif de commutation (2) qui lui est ajouté en série,
- la partie de couvercle (13a) portant le ou chaque contact de couplage (15a, 15b), et
- le contact de couplage (15a, 15b) établissant le contact avec un contact correspondant (18) interne au dispositif, lequel présente une première branche de contact (19) pour établir le contact avec ce contact de couplage (15a, 15b) et une deuxième branche de contact (19) pour établir le contact avec un contact de couplage (15a, 15b) du dispositif de commutation (2, 2') qui lui est ajouté en série.

2. Dispositif de commutation (2) selon la revendication 1, **caractérisé en ce que** le support de contacts (13) présente une partie d'engagement (13b) qui s'engage dans un évidement de jonction (21) correspondant du boîtier de dispositif (3) lors du pivotement du support de contacts (13).

3. Dispositif de commutation (2) selon la revendication 2, **caractérisé en ce que** la partie d'engagement (13b) est formée sur la partie de couvercle (13a) du support de contacts (13).

4. Dispositif de commutation (2) selon l'une des revendications 1 à 3, **caractérisé en ce que** le contact de couplage (15a, 15b) est réalisé sous la forme d'un contact à ressort qui, lors du pivotement, établit le contact avec un contact correspondant (18) interne au dispositif.

5. Dispositif de commutation (2) selon la revendication 4, **caractérisé en ce que** le contact de couplage (15a, 15b) est réalisé sous la forme d'un contact à ressort à deux branches.

6. Dispositif de commutation (2) selon l'une des revendications 1 à 5, **caractérisé en ce que** le contact correspondant (18) interne au dispositif, avec lequel le contact de couplage (15a, 15b) établit le contact, présente une branche de contact à ressort (20) pour établir le contact avec un contact d'une carte de circuit imprimé ou d'une électronique interne au dispositif.

7. Dispositif de commutation (2) selon l'une des revendications 1 à 6, **caractérisé en ce que** le support de contacts (13) présente au moins un tourillon de palier (22) qui est logé dans un coussinet de palier d'une paroi latérale de boîtier (23).

8. Ensemble de dispositifs de commutation (1) comprenant un certain nombre de dispositifs de commutation (2) selon l'une des revendications 1 à 7, lesquels peuvent être notamment ajoutés en série sur un rail support ou un rail chapeau (7), et dont le contact correspondant (18) interne au dispositif est accessible par un côté de boîtier (9) pour conduire du courant et/ou des signaux, le ou chaque contact de couplage (15a, 15b) étant prévu et configuré sous la forme d'un mécanisme pivotant pour ouvrir et fermer de façon sélective au dispositif la liaison de contact entre les dispositifs de commutation (2) qui sont ajoutés en série et/ou un module d'alimentation (2').
